# EUROPÄISCHE PATENTSCHRIFT

(11) **EP 2 611 820 B1**
(45) Veröffentlichungstag und Bekanntmachung des Hinweises auf die Patenterteilung: **07.06.2017**
(21) Anmeldenummer: 11757740.3
(22) Anmeldetag: 01.09.2011
(51) Int. Cl.: C07G 1/00

(54) **VERFAHREN ZUR LIGNINGEWINNUNG**
METHOD FOR LIGNIN RECOVERY
PROCÉDÉ D'OBTENTION DE LIGNINE

(30) Priorität: 02.09.2010 AT 14762010
(43) Veröffentlichungstag der Anmeldung: 10.07.2013
(73) Patentinhaber: Annikki GmbH, 8020 Graz (AT)
(72) Erfinder: FACKLER, Karin, A-1140 Wien (AT); TERS, Thomas, A-1230 Wien (AT); ERTL, Ortwin, A-8076 Vasoldsberg (AT); MESSNER, Kurt, A-1170 Wien (AT)
(74) Vertreter: Schwarz, Albin
(86) Internationale Anmeldenummer: PCT/AT2011/000357
(87) Internationale Veröffentlichungsnummer: WO 2012/027767

(56) Entgegenhaltungen:
- WO-A1-96/41052
- WO-A1-2007/129921
- DE-A1- 19 702 769
- US-A- 5 777 086
- US-A1- 2009 062 516
- US-A1- 2010 159 522
- AVGERINOS G C ET AL: "Selective solvent delignification for fermentation enhancement", BIOTECHNOLOGY AND BIOENGINEERING, WILEY & SONS, HOBOKEN, NJ, US, Bd. 25, Nr. 1, 1. Januar 1983 (1983-01-01) , Seiten 67-83, XP002590443, ISSN: 0006-3592
- MARTON RENATA ET AL: "ETHANOL-ALKALI PULPING", TAPPI, GA, Bd. 65, Nr. 6, 1. Juni 1982 (1982-06-01), Seiten 103-106, XP008135542, ISSN: 0039-8241
- IVANOW ET AL: "Delignification du bois de charme par solvolyse alcaline", PAPETERIE,, Bd. 132, 1. Januar 1989 (1989-01-01), Seiten 22-27, XP009154489,

## Beschreibung

Die vorliegende Offenbarung betrifft ein Verfahren zur Gewinnung von Lignin aus
lignocellulosischem Material durch Aufschluss mit Alkohol, insbesondere mit einem C₁₋₄Alkohol, Wasser und einer Base.

Im Zusammenhang mit der Verknappung von Rohöl gewinnt der nachwachsende Rohstoff Lignocellulose (Stroh, Holz, Papierabfälle etc.) als Ausgangsmaterial für chemische Produkte und Treibstoffe sehr an Bedeutung. Lignocellulose besteht aus den ultrastrukturell vernetzten, polymeren Hauptkomponenten Cellulose, Hemicellulose und Lignin, die häufig etwa 85 - 90 % des Rohstoffes ausmachen. Der Rest kann unter dem Begriff Extraktstoffe zusammengefasst werden.

Die Spaltung der als Polymere vorliegenden Komponenten und ihre Auftrennung in einzelne Produktströme sowie deren weitere Verarbeitung zu höherwertigen Produkten ist die Aufgabe von Bioraffinerien. Hier sollen nur Bioraffinerien der biochemischen Plattform Erwähnung finden. Die Rentabilität solcher Bioraffinerien ist weitgehend davon abhängig, welche Wertschöpfung aus den Produktströmen erzielt werden kann. Dies wird wiederum massiv von der Reinheit der einzelnen Produktströme beeinflusst, da nachgeschaltete Auftrennungsprozesse schwierig und kostspielig sein können. Als ideal kann also ein Prozess betrachtet werden, bei dem die Spaltung der einzelnen Hauptkomponenten möglichst selektiv erfolgt. Einen starken Einfluss auf die Wertschöpfung des gesamten Prozesses hat neben der Nutzung des Kohlenhydrat Anteiles die Menge und Qualität des gewonnen Lignins. Lignin gewinnt als Ersatz für petrochemisch erzeugte Aromaten sehr stark an wirtschaftlicher Bedeutung.

Bioraffinerien können unterschiedliche Ziele verfolgen, die vom jeweiligen chemischen Aufschlussprinzip und dem dabei erzielten Selektivitätsgrad bestimmt werden. Beispielhaft seien die Bioalkoholproduktion und die Zellstoffherstellung genannt.

Bei der Produktion von Bioalkohol werden die geringsten Anforderungen an Aufschluss- und Trennverfahren gestellt. Das Hauptziel ist die Zugänglichkeit des Substrates für die Cellulase- und Hemicellualase Enzymkomplexe zu verbessern, um die für die Ethanolproduktion erforderlichen Zucker hydrolytisch frei zu setzen. Dies kann bereits durch schwache Delignifizierung mit teilweiser Depolymerisation der Hemicellulose durch sogenannte "Steamexplosion"-Verfahren erreicht werden. Beispielsweise wird in dem von DONG, DK entwickelten Autohydrolyse Prozess von Stroh durch Temperaturen nahe um 200°C und die dabei abgespaltene Essigsäure die Hemicellulose zu etwa 2/3 herausgelöst und als Futtermittel verwertet. Die Cellulose und restliche Hemicellulose kann nach enzymatischer Hydrolyse zu Ethanol vergoren werden. Lignin wird plastifiziert, kondensiert zu Tröpfchen und ist für eine weitere chemische Nutzung ungeeignet. Es dient als thermische Energiequelle. Bei anderen, ähnlichen Verfahren (ENREL, IOGEN, SEKAB) wird Säure zugesetzt, um den Aufschlussgrad und damit die Ethanolausbeute zu erhöhen *(Technical report NREL*/*TP-510-46214, August 2009).*

Bei Prozessen zur Zellstofferzeugung werden wesentlich höhere Anforderungen an die Selektivität des Aufschlussverfahrens gestellt. Ziel ist eine möglichst hohe Delignifizierung bei möglichst geringem Festigkeitsverlust der Cellulose und möglichst niedrigem Hemicelluloseverlust, um hohe Ausbeuten zu erreichen. Dieses Ziel wird vorwiegend durch alkalische Verfahren erreicht.

Eines der ältesten Verfahren, das nach wie vor in geringem Ausmaß zur Zellstofferzeugung aus Stroh angewendet wird, ist das Soda-Verfahren, bei dem Stroh mit Natronlauge knapp unter 100°C aufgeschlossen wird (J.H.Lora & E. Escudero, 2000, Soda pulping of agricultural fibres for boardmaking application; Paper Technology, May 2000, 37-42*).* Aufgrund einiger, im Vergleich zu Holz negativer Eigenschaften von Stroh (saisonaler Anfall, Lagerungsfähigkeit, Kurzfasern, Entwässerungsverhalten), sind die Einsatzmöglichkeiten begrenzt. Im Zuge der wachsenden wirtschaftlichen Bedeutung des Lignins als Ersatz für petrochemisch erzeugte Aromaten, wurde von Granit ein Verfahren zur Gewinnung des Lignins nach Natronlaugen-Kochung entwickelt, bei dem das ansonsten nach Säurefällung nicht filtrierbare Lignin durch nachträgliches Erwärmen und Reifen abgetrennt und gewonnen werden kann *(A. Abaecherli, F. Doppenberg, 2003, Method for preparing alkaline solutions containing aromatic polymers,* EP0970275 (B1*)).* Das schwelfreie Lignin ist unter dem Handelsnamen Protobind erhältlich.

Das bekannteste alkalische Aufschlussverfahren ist der Sulfat- oder "Kraft"-Prozess, bei dem mit Natronlauge und Natriumsulfit aufgeschlossen wird. Der Prozess läuft bei 170°C unter Verwendung von hohen NaOH-Konzentarationen ab (18-24% bezogen auf Holz TG für Zellstoffe mit Kappa ca. 5) und ist auf die Erzeugung reißfester, heller Zellstoffe optimiert. Das dabei anfallende Sulfatlignin ist durch Repolymerisationsreaktionen im Laufe der Kochung zum Teil hoch kondensiert und enthält außerdem ca. 2% Schwefel, wodurch sein Anwendungsbereich als Chemierohstoff sehr begrenzt ist. Durch den neuerdings entwickelten Lignoboost Prozess *(*P. Tomani, 2009, The Lignoboost Process, NWBC-2009 The 2nd Nordic Wood Biorefinery Conference, Helsinki, Finland,Sseptember 2-4, 2009, 181-188*.)* wird das Kraftlignin ausgefällt und dient vorwiegend der thermischen Verwertung, z.B. in der Chemikalienrückgewinnung.

Die zweitgrößte Quelle für technische Lignine ist das Sulfit-Zellstoff Verfahren, bei dem Holz vorwiegend bei saurem pH-Wert mit Ca- oder Mg-Sulfit aufgeschlossen wird. Das daraus resultierende Lignosulfonat ist ebenfalls kondensiert und schwefelhältig, ist aber auf Grund seiner Wasserlöslichkeit für einen breiteren Anwendungsbereich geeignet.

Ein Nachteil alkalischer Verfahren, der speziell bei hohen Temperaturen zum Tragen kommt, ist, dass verschiedene Abbaureaktionen der Kohlenhydrate stattfinden. Bei hoher Alkalinität erfolgt bereits bei etwa 100°C ein intensiver Abbau der Hemicellulose und gleichzeitig setzt die sogenannte "Peeling"-Reaktion ein, die wiederum einen Abbau der Cellulose und Hemicellulose vom reduzierenden Ende einleitet und mit steigender Temperatur zunimmt. Bei hoher Temperatur erfolgt dann eine hydrolytische Spaltung der glykosidischen Bindungen der Kohlenhydrate *(*D. Fengel, G. Wegener, 1984, Wood. Chemistry, Ultrastructure, Reactions; Walter de Gruyter, Berl*in).* Diese unerwünschte Nebenreaktion kann durch Anthrachinon sowie durch Alkohol unterdrückt werden. *(*Nakano et al., 1981, Studies on alkali-methanol cooking; Proc. Of Ekman Days, 1981, Vol. , pp. 72-77, Stockholm, Swed*en)* haben nachgewiesen, dass Alkohol in seiner Funktion als Scavenger Radikal induzierte Abbaureaktionen verhindert und dadurch die Stabilität der Cellulose in alkalisch-alkoholischen Systemen verbessert wird. Xylan macht den Großteil der Hemicellulose von Gräsern und Stroh aus. Diese, sonst auch auf das Xylan ausgerichtete Schutzreaktion unterblieb in der Initialphase der Natronlauge-Zellstoffkochung von Reedgras (*Arundo donax*) (Bedingungen: 130°C - 150°C, 25% NaOH bezogen auf das Substrat Trockengewicht, Ethanol: Wasser = 40:60, Verhältnis Flüssigkeit:Feststoff = 6:1) *(*A.A. Shatalow und H. Pereira, 2005, Kinetics of polysaccharid degradation during ethanol-alkali delignification of giant reed - Part 1; Cellulose and xylan; Carbohydrate Polymers, 59, 435-442*).* Bei diesen Temperaturen wurden etwa 55% des Xylans bereits in der Anfangsphase der Kochung mit ähnlicher Rate wie Lignin abgebaut. Die Schutzfunktion traf erst auf die zweite Hälfte des Xylans zu. Der depolymerisierte Xylan Anteil wird dann bei hoher Alkalinität und Temperatur anschließend durch Hydrolyse und Peeling Reaktionen weiter zu Zuckern gespalten. Bei hoher NaOH-Konzentration und Temperaturen über 100°C findet also eine deutliche Koppelung des Ligninabbaus an den Xylanabbau statt und führt zu Kochlaugen, die Abbauprodukte beider Komponenten enthalten.

Anthrachinon wird in verbesserten Soda Prozessen *(*H. Sixta, G. Schild, 2009, New generation Kraft processes, The 2nd Nordic Wood Biorefinery Conference, Helsinki, Finland,Sseptember 2-4, 2009, 53-66*)* zum Schutz der Cellulose eingesetzt. Im ASAM Prozess, bei dem Holz bei 180°C mit Alkali und Sulfit, unter Zusatz von Anthrachinon und Methanol gekocht wird, wurde versucht beide Prinzipien zu nutzen *(*R. Patt, O. Kordsachia, H.-L. Schubert, 1998, The ASAM Process; In: R.A. Young and M. Akhtar, Environmentally friendly technologies for the pulp and paper industry; John Wiley & Sons, Inc., New York, 101-132*).* Aus den Ergebnissen geht deutlich hervor, dass es selbst unter Verwendung von Methanol und Anthrachinon nicht möglich war, den Ligninanbau vom Hemicelluloseabbau zu entkoppeln. Bei der Kochung von Nadelholz wurden trotzdem 30% Xylan und 80% Mannan freigesetzt. Der ASAM Prozess wurde nie großtechnisch angewendet.

Derzeit gibt es intensive Bemühungen, Zellstofffabriken zu Bioraffinerien zu erweitern und neben dem Hauptprodukt Zellstoff auch Nebenprodukte wie Lignin, Xylose, Essigsäure, oder das aus dem unspezifischen Abbau des Xylans stammende Furfural aus der Kochlauge zu gewinnen. Ebenso werden Verfahren, die aus verschiedenen Gründen zur Zellstoffproduktion nicht kompetitiv waren, wieder auf ihre Effizienz als Bioraffinerie, wo andere Kriterien zu erfüllen sind, neu untersucht.

Während Zellstoffkochungen auf möglichst hohe Delignifizierung bei Erhalt der Qualität der Fasern ausgerichtet sind und dabei chemische Umwandlungen von Hemicellulose-Spaltprodukten sowie Kondensationsreaktionen des Lignins in Kauf genommen werden, ist man bei einem idealen Bioraffinerie Prozess bestrebt, die Hauptkomponenten der Lignocellulose und im besonderen das Lignin, bzw. seine Spaltprodukte in möglichst nativem Zustand zu gewinnen. Weiters zielen - im Gegensatz zu den erwähnten Zellstoff-Kochprozessen, wo alle Spaltprodukte gemeinsam in der Kochlauge anfallen - Bioraffinerie-Prozesse darauf ab, die Lignocellulose Hauptkomponenten bzw. deren Spaltprodukte in getrennten Fraktionen zu gewinnen. Nachdem chemische Reaktionen beim Lignocellulose Aufschluss immer mit unerwünschten Nebenreaktionen verbunden sind, sollte es das Ziel einer idealen Bioraffinerie sein, diese Nebenreaktionen so niedrig als möglich zu halten.

Der Erfolg eines Enzymeinsatzes zum Lignocellulose Aufschluss ist prinzipiell durch zwei Faktoren eingeschränkt. Erstens ist die Umsetzungsrate hydrolytischer Enzyme auf nativer Lignocellulose durch ihr hohes Molekulargewicht und die damit verbundene geringe Diffusionsrate sehr niedrig. Dies hat zur Folge, dass als erster Schritt eine Auflockerung des Lignocellulosekomplexes, verbunden mit einer Erhöhung der Porosität des Substrates erfolgen muss. Diese kann nur durch die chemische Depolymerisation und darauffolgende Extraktion einer bestimmten Menge von Lignocellulose Komponenten bewirkt werden. Nachdem Cellulose die am schwersten lösliche Komponente ist, stehen für den ersten Aufschlussschritt die Hemicellulose und/oder das Lignin zur Wahl, wobei, wie oben erwähnt, dieser Aufschlussschritt so selektiv als möglich sei soll. Die verschiedenen Bioraffineriekonzepte unterscheiden sich im Wesentlichen in der Auswahl des chemischen Prinzips zur Durchführung dieses ersten Schrittes und den sich daraus zwangsläufig ergebenden Folgen für die weitere Gewinnung der Produktströme.

Als Bioraffinerie Konzepte sind in neuer Zeit Organosolv Prozesse wieder aufgegriffen worden. Diese wurden in den 80-er Jahren entwicklet, als man bestrebt war Chlor als Bleichchemikalie durch umweltfreundlichere Chemikalien zu ersetzen, diese aber nicht dieselben delignifizierenden Eigenschaften aufwiesen. Damals wurden Strategien zu einem "extended cooking" entwickelt, das im Wesentlichen darauf beruhte, organische Lösungsmittel in den Kochprozess mit einzubeziehen und dadurch den Delignifizierungsgrad zu erhöhen und den Bleichaufwand zu senken. Als Lösungsmittel wurden vorwiegend Alkohole wie Ethanol oder Methanol verwendet, die hauptsächlich die Löslichkeit des Lignins erhöhen sollten, während als eigentliche Aufschlusschemikalien weiterhin Säuren, Alkali, Sulfit oder Sulfid oder oxidative Reaktionen fungierten *(*H. Hergert, 1998, Developments in organosolv pulping; In: R.A. Young and M. Akhtar, Environmentally friendly technologies for the pulp and paper industry; John Wiley & Sons, Inc., New York, 5-68*).* Diese Prozesse haben sich zur Zellstoffproduktion nicht bewährt, werden aber, wie erwähnt, derzeit als Bioraffinerie-Prozesse wieder neu bewertet.

Grundlegend lassen sich zwei Typen von Organosolv Prozessen unterscheiden: saure und basische.

Ein saurer Prozess ist z.B. der Allcell Prozess, der von der Firma LIGNOL übernommen und weiter entwickelt wurde *(*C. Arato, E.K. Pye, G. Gjennestad, 2005, The Lignol approach to biorefining of woody biomass to produce ethanol and chemicals; Appl. Biochem. Biotechnol., Vol. 121-12:871-882*).* Als Substrate werden Holz, Stroh, Bagasse verarbeitet. Die zugrundeliegende chemische Reaktion ist die autohydrolytische Spaltung von Hemicelluose bei einem pH-Wert von 3,8-2,0, der sich durch die vom Xylan abgespaltene Essigsäure ergibt (Bedingungen: 180-195°C, Ethanolkonzentration 35-70%, Flüssigkeits : Feststoff Verhältnis von 4:1 bis 10:1, Reaktionszeit von 30-90 Minuten). Dadurch wird zum Teil Cellulose in Form von unlöslichen Oligosacchariden und ein großer Teil der Hemicellulose zu löslichen Oligo- und Monosacchariden abgespalten. Ein Teil der Pentosen wird unter den Reaktionsbedingungen zu Furfural oxidiert. Lignin wird ebenfalls teilweise hydrolysiert und fällt gemeinsam mit den anderen Abbauprodukten in der Kochlauge an, aus der die Abbauprodukte dann gewonnen werden. Der andere, nicht hydrolysierte Teil verbleibt im Feststoff und wird enzymatisch zu Zuckern hydrolysiert und zu Ethanol vergoren. Das im Feststoff verbliebene Lignin (20-25% des ursprünglichen) fällt als Fermentationsrückstand an und kann nur noch verbrannt werden.

Ein ähnlicher saurer Organosolv Bioraffinerie Prozess zum Aufschluss von Holz ist in Deutschland in Entwicklung *(Pilotprojekt "Lignocellulose-Bioraffinerie" Gemeinsamer Schlussbericht zu den wissenschaftlichen Ergebnissen aller Teilvorhaben).*

Aus der Abbildung 4-30, Seite 215, geht hervor, dass ohne Zusatz von Schwefelsäure 68% des Lignins und 77,5 % der Hemicellulose bzw. mit Zusatz von 1% Schwefelsäure 64% Lignin und 70% der Hemicellulose aus dem Rohstoff abgebaut werden und gemeinsam in Lösung gehen. Ausserdem enthält dieser gemeinsame Teilstrom zusätzlich Furfural als Hemicellulose Abbaupodukt. Der verbleibende Feststoff enthält noch 32% bzw. 36% des ursprünglichen Lignins und 22,5% bzw. 30% der Hemicelluose.

Zusammenfassend kann gesagt werden, dass bei sauren Prozessen einerseits die gewonnene Lignmenge relativ niedrig ist und der Ligninabbau nicht vom Hemicellulose Abbau entkoppelt werden kann. Auf Grund des relativ schlechten Ligninabbaus, entsteht ein Faserstoff mit einem Restligningehalt, der im Falle einer Verwendung als Chemierohstoff einen erheblichen Bleichaufwand erfordern würden und für diese Verwendung ungeeignet ist. Es wird auch primär die Verwendung als Rohstoff für die Bioalkohol Gewinnung angestrebt.

Basische Organosolv-Prozesse wurden in der Vergangenheit wesentlich weniger untersucht als saure, da bei hohem Natronlauge Einsatz, im Speziellen bei Verwendung von Stroh als Substrat, hohe technische Anforderungen an die Natronlaugen-Rückgewinnung gestellt werden (z. B. *Marton & Ganzow 1982, Use of ethanol in alkaline pulping;* WO 82/01568*).*

In Deutschland wurde in den 90-er Jahren der Organocell-Prozess zur Zellstoffkochung bis zur industriellen Anwendung entwickelt *(*N. Zier, 1996, Strukturelle Merkmale eines Organosolv-Lignins bei Variation der Parameter; Dissertation Technische Universität Dresden*).* Der Prozess läuft 2-stufig ab, beginnend mit einer Alkohol-Wasser (30:70) Imprägnierung bei 110-140°C und anschließender Kochung bei 165-170°C unter Zusatz von 30% NaOH und 0,1 % Anthrachinon, bezogen auf das Trockengewicht des Substrates. Der Prozess war für den Aufschluss von Laub- und Nadelholz, sowie auch für Einjahrespflanzen geeignet. Die Zellstoffqualität war der von Kraft-Zellstoff vergleichbar und konnte mit Sauerstoff chlorfrei gebleicht werden. Verschiedenen Angaben zufolge wurde die Anlage bald nach Inbetriebnahme auf Grund technischer Probleme wieder geschlossen, die zum Teil mit der Rückgewinnung der hohen Menge an Natronlauge zusammenhingen *(*El-Sakhawy et al., 1996a: Organosolv pulping, (3), ethanol pulping of wheat straw; Cellul Chem Technol 30: 281-296*).*

Für einen rentablen Bioraffinerie-Prozess, der nicht auf die Gewinnung von Bioalkohol, sondern die Nutzung aller Hauptkomponenten der Lignocellulose als Chemie- oder Materialrohstoff abzielt, ist die Gewinnung eines möglichst hohen Anteils des vorhandenen Lignins erforderlich. Dies soll in einem einheitlichen Produktstrom mit geringen Verunreinigungen durch Abbauprodukte aus anderen Komponenten erfolgen.

Wenn der Holz-Aufschluss auf Hemicellulose Abbau durch Säure beruht, ist die Menge des abgebauten Lignins mit etwa 65-70% nicht ausreichend. Außerdem fällt das Lignin gemeinsam mit den Abbauprodukten aus der Hemicellulose an und der Stoffstrom muss durch Destillation aufgetrennt werden.

Hohe Ligninabbauraten sind hauptsächlich mit basischen Verfahren zu erzielen. Bei den bisher angewandten Aufschlussverfahren werden stets hohe Natronlaugen Konzentrationen bei hohen Temperaturen eingesetzt. Dies bewirkt einerseits eine chemische Veränderung des Lignins durch Kondensationsreaktionen, wodurch die Qualität des Lignins herabgesetzt wird und anderseits kann der Ligninabbau nicht vom Hemicelluloseabbau entkoppelt werden, sodass gemischte Produktströme entstehen. Dies trifft auch für die bisher angewandten Organossolv Verfahren zu.

Ein idealer Bioraffinerieprozess sollte daher möglichst hohe Ligninabbauraten bei möglichst geringem Chemikalieneinsatz aufweisen, ein natives Lignin produzieren und den Hemicelluloseabbau möglichst niedrig halten. Weiters soll der niedrige Ligningehalt nachgeschaltete Enzymschritte fördern.

Gemäß Beckmann und Liesche (Beckmann et al., 1921, Lignin aus Winterroggenstroh; Zeitschrift für angewandte Chemie 34: 285-288) wurden Versuche durchgeführt, deren Ziel es war, Lignin aus Stroh für die chemische Analyse herzustellen. Die Versuchsbedingungen waren folgende:
600 ml Alkohol 96%-ig + 400 ml Wasser + 20 g NaOH (= 2%-ige Lösung)
Alkohol: Wasser = 60 : 40.
Trockensubstanz (TS): Flüssigkeit = 1 : 8 (= 11,11% TS) = 125 g TS : 1000ml = 20g NaOH / 125g TS = 16% NaOH/TS. Raumtemperatur

Unter diesen Bedingungen wurde eine Ligninausbeute von 23,6% erzielt. Eine technische Anwendung unter diesen Bedingungen wäre allerdings völlig unrentabel.

Ein Verfahren zur selektiven Lösungsmittel-Delignifizierung zur Verbesserung der anschließenden Fermentation von Cellulose ist aus der US 4,395,543 (Wang, Avgerinos) bekannt. In dieser Patentliteratur sind jedoch für sämtliche Reaktionsparameter und Reaktanten sehr breite Bereiche angegeben. Eine genauere Beschreibung dieses Verfahrens ist der wissenschaftlichen Literatur zu entnehmen (Biotechnology and Bioengineering, Vol. XXV., Seiten 67-83 (1983)). Gemäß diesem Verfahren wird der Aufschluß mit einer großen Menge an Base, bezogen auf das Trockengewicht des aufzuschließenden lignocellulosischen Materials, nämlich 20 Teile Base pro 100 Teile lignocellulosischen Materials, vorgenommen. Hohe Basenmengen sind in der industriellen Praxis von Nachteil.

In ähnlicher Weise wurde von Philips & Goss *(*M. Philips and M.J. Goss (1934) The Chemistry of Lignin; IX; Lignin from barley straw; J. Am. Chem. Soc., 56, 2707*)* Gerstenstroh nach vorheriger Alkohol:Benzol Extraktion mit 22% NaOH (bezogen auf Stroh TS) bei Raumtemperatur aufgeschlossen. Die Ligninausbeute war, ähnlich wie bei Beckmann, äußerst gering. Nur 6,8% des ursprünglich im Stroh enthaltenen Lignins wurden herausgelöst.

Ein Beispiel für hohen Ligninabbau, aber fehlender Selektivität wird in Lawther 1997 berichtet. *(*J. M. Lawther, R.-C. Sun, W. B. Banks (1997) Isolation and Characterization of organosolv lignin under alkaline condition from wheat straw; Int. J. of Polymer Analysis and Characterization, 3:2, 159-175*).* Dabei wird Organosolv Lignin nach folgender Vorgangsweise gewonnen:
Durch Mahlen von Weizenstroh wird ein Pulver 0,25 mm Korngröße (60 mesh screen)
hergestellt und in Ethanol:Wasser = 60:40, 80% NaOH bezogen auf Stroh Trockengewicht, 75°C, 2 Stunden aufgeschlossen.

Dabei wurden 58,9 % Lignin abgebaut aber gleichzeitig 61,6% Hemicellulose gelöst.

Das Beispiel zeigt, dass bei zu hoher NaOH Konzentration die vor Hemicelluloseabbau schützende Wirkung von Ethanol verloren geht. Der relativ hohe Ligninabbau bei nur 2 Stunden Reaktionszeit ist vorwiegend durch die minimale Korngröße des Strohs zu erklären. Die Herstellung derart kleiner Partikel ist jedoch aufgrund des hohen Energieaufwandes völlig unwirtschaftlich.

Es wurde nun ein Verfahren zur Gewinnung von Lignin gefunden, bei dem Nachteile bekannter Verfahren vermieden werden können.

In einem Aspekt stellt die vorliegende Erfindung ein Verfahren zur Gewinnung von Lignin aus lignocellulosischem Material durch Aufschluss mit Alkohol, insbesondere mit einem C₁₋₄Alkohol, Wasser und einer Base, ausgewählt aus NaOH oder KOH, insbesondere NaOH, bei einer Temperatur von unter 100°C, insbesondere von 40°C bis 90°C, insbesondere von 50°C bis 70°C zur Verfügung, das dadurch gekennzeichnet ist, dass 3 bis 12 Teile Base, insbesondere 4 bis 10 Teile Base, insbesondere bevorzugt 5 bis 8 Teile Base pro 100 Teile des aufzuschließenden trockenen lignocellulosischen Materials eingesetzt werden.

Ein Verfahren, das von der vorliegenden Erfindung zur Verfügung gestellt wird, wird hier auch als "Verfahren gemäß (nach) vorliegender Erfindung" bezeichnet.

In den im vorbestandenen Wissen umfassten alkalischen Niedertemparatur-Verfahren zur Delignifizierung von Stroh wurden vorwiegend Ethanol/Wasser Mischungen als Lösungsmittel verwendet. Die dabei gewählten Bedingungen grenzen sich deutlich von den im Verfahren gemäß vorliegender Erfindung definierten Reaktionsbedingungen ab. Bei keinem der erwähnten Verfahren wurde eine weitgehende Entkoppelung des Ligninabbaus vom Hemizellulose Abbau erreicht. Aus der Entkoppelung des Ligninabbaus vom Hemicelluloseabbau ergibt sich eine hohe Selektivität des Verfahrens. Diese ist nur durch die im Verfahren gemäß vorliegender Erfindung beschriebene Merkmalskombination möglich, aus der sich eine besondere Wirtschaftlichkeit des Verfahrens ergibt. Zusammenfassend muß das vorbestandene Wissen im Hinblick auf das gefundene Verfahren folgendermaßen bewertet werden:
Der wesentliche Vorteil des Verfahrens gemäß vorliegender Erfindung ist die hohe Delignifizierung bei hoher Selektivität. Diese ist nur durch die Auswahl der im vorliegenden, erfindungsgemäßen Verfahren gewählten Parameter-Kombination erreichbar. Diese Bedingungen sind im Gegensatz zum vorbestandenen Wissen über Ethanol/Wasser Mischungen auch wirtschaftlich vertretbar. Basenmengen (z.B. NaOH), wie sie im Bezug auf das eingesetzte Trockengewicht des Substrates im vorbestandenen Wissen eingesetzt werden, sind per se unwirtschaftlich, ausserdem erfordert ihre Rückgewinnung hohen energetischen Aufwand. Duch die hohe Selektivität des Ligninabbaus ist das Verfahren gemäß vorliegender Erfindung auch insoferne wirtschaftlicher als die beschriebenen, da aufwändige Trennverfahren zur Abtrennung großer Mengen von Hemicellulose Spaltprodukten (Xylose, Xylooligosaccharide) vermieden werden. Die auf Grund der hohen Ligninabbauraten verbleibende geringe Menge Restlignin im Feststoff verbessert auch wesentlich die Voraussetzungen für eine effiziente enzymatische Gewinnung von Xylose bzw. Xylooligosacchariden aus Xylan sowie von Glucose aus Cellulose, welche unter anderem auch bei der Herstellung von Bioalkohol sowie anderen Fermentationsprodukten angestrebt werden. Durch das selektive und effiziente Aufschlussverfahren gemäß vorliegender Erfindung wird die gesamte Wertschöpfungskette aus Lignin, Xylan und Cellulose wirtschaftlich im positiven Sinne beeinflusst.

Der Ligninaufschluss in einem Verfahren gemäß vorliegender Erfindung wird bei einer Temperatur von unter 100°C, bevorzugt von 40°C bis 90°C, besonders bevorzugt von 50°C bis 70°C durchgeführt.

Im Verfahren gemäß vorliegender Erfindung wird als Base KOH oder bevorzugt NaOH eingesetzt.

In einem Verfahren gemäß vorliegender Erfindung, wird als Alkohol bevorzugt ein aliphatischer Alkohol, wie ein C₁₋₆Alkohol, besonders bevorzugt ein C₁₋₄Alkohol, wie Ethanol, Isopropanol eingesetzt. In einer bevorzugten Ausführungsform wird Ethanol, in einer anderen bevorzugten Ausführungsform Isopropanol als Alkohol eingesetzt.

Ein weiterer, wesentlicher Aspekt des gefundenen Verfahrens besteht darin, dass es sich überraschenderweise gezeigt hat, dass die durch Ethanol/Wasser Mischungen unter Einhaltung der beschriebenen Parameter erzielbare Wirtschaftlichkeit durch die Verwendung von Isopropanol/Wasser Mischungen noch übertroffen wird, indem bei gleicher Selektivität noch höhere Ligninabbauraten erzielt werden. Die Verwendung von Isopropanol/Wasser Mischungen zur Delignifizierung bei Temperaturen unter 100°C ist bisher nicht bekannt und führt besonders unter der in der Erfindung beschriebenen Parameter-Kombination zu bisher nicht erreichten, vorteilhaften Ergebnissen.

In einem weiteren Aspekt stellt die vorliegende Erfindung die Verwendung von Isopropopanol als Alkohol in einem Verfahren zur Gewinnung von Lignin aus lignocellulosischen Material zur Verfügung, insbesondere in einem Aufschlussverfahren, insbesondere, wobei das Verfahren im alkalischen Milieu durchgeführt wird, insbesondere die Verwendung von Isopropopanol als Alkohol in einem Verfahren gemäß vorliegender Erfindung.

In einem weiteren Aspekt stellt die vorliegende Erfindung ein Verfahren zur Gewinnung von Lignin aus lignocellulosischen Material, zur Verfügung, das dadurch gekennzeichnet ist, dass Isopropopanol als Alkohol eingesetzt wird, insbesondere ein Aufschlussverfahren, insbesondere, wobei das Verfahren im alkalischen Milieu durchgeführt wird, insbesondere ein Verfahren gemäß vorliegender Erfindung.

Alkohol liegt in einer wässrigen Lösung im erfindungsgemäßen Verfahren bevorzugt in einem Ausmaß von 10 bis 70 Vol%, z. B. 20 bis 50 Vol%, bevorzugt von 30 bis 40 Vol% vor.

Im erfindungsgemäßen Verfahren beträgt der Feststoffgehalt bei Beginn des Aufschlussverfahrens bevorzugt 3-40 Gew%, das lignocellulosische Material in der wässrigen Lösung liegt nämlich vorzugsweise in einer Stoffdichte von 3-40 Gew%, wie 5-40 Gew%, insbesondere 5-20% Gew% vor.

Die Verwendung von Alkohol erlaubt weitgehend die Entkoppelung des Ligninabbaus vom Hemicelluloseabbau. Bei Ligninabbau Raten von >80% werden maximal 10% Hemicellulse abgebaut. Dieses Verhältnis liegt weit über der, bei anderen Verfahren erreichten Selektivität.

In einem Verfahren gemäß vorliegender Erfindung liegt das Volumsverhältnis von Wasser zu Alkohol in einem Bereich von nicht unter 10:90, insbesondere in einem Bereich von 10:90 bis 90:10, insbesondere von 20:80 bis 40:60, oder in einem Bereich von 60:40 oder darüber, insbesondere von 60:40 bis 90:10. Es hat sich beispielsweise herausgestellt, dass für einen maximalen Ligninabbau bei Verwendung von Ethanol als Alkohol ein Wasser: Ethanol Verhältnis von 60:40 bis 80:20, insbesondere von 70 : 30 und für maximale Selektivität ein Wasser : Ethanol Verhältnis von 30:70 bis 50: 80, insbesondere von 40 : 60 vorteilhaft ist.

Als lignocellulosisches Material wird Lignin enthaltendes, organisches Material eingesetzt, vorzugsweise Einjahrespflanzen, wie (trockene) Gräser, oder Teile von Gräsern oder Laubholz, vorzugsweise Gräser, Stroh, Energiegräser, wie z. B. Switchgrass, Elefantengras oder Abaca, Sisal, Bagasse, oder untypische Lignocellulosesubstrate, wie Spelzen, z.B. Deckspelzen, wie Reisspelzen, bevorzugt Stroh, Energiegräser Bagasse oder Spelzen, besonders bevorzugt Stroh oder Bagasse, z. B. Stroh, wie Weizenstroh, eingesetzt.

Stroh hat eine stark hydrophobe Oberfläche, sodaß die Benetzung mit wässrigen Lösungen ein Problem darstellt. Es hat sich gezeigt, dass es durch die Verwendung von Alkohol möglich ist, selbst ohne Druck die Reaktionslösung in die Poren des Substrates einzubringen und die vorhandene Luft durch Reaktionslösung zu ersetzen. Ferner hat sich gezeigt, dass bei den gewählten Reaktionsbedingungen Alkohol die Extraktion der Spaltprodukte aus Stroh beschleunigt und dazu beiträgt, die Ligninspaltprodukte in Lösung zu halten, während im Gegensatz dazu Alkohol die Löslichkeit der Hemicellulose und deren Spaltprodukte herabsetzt und somit die Hemicellulose im Substrat gehalten wird.

In einem Verfahren gemäß vorliegender Erfindung wird beträgt die Aufschlussdauer bevorzugt 2 Stunden bis 36 Stunden, besonders bevorzugt 3 bis 18 Stunden.

Ein Verfahren gemäß vorliegender Erfindung wird bevorzugt derart ausgeführt, dass der Lignocellulosegehalt der Aufschlusslösung in einem Bereich von 5% bis 40 Gew.%, insbesondere von 10 bis 20 Gew.% liegt. Die für ein bestimmtes Aufschlussziel ideale Feststoffkonzentration kann durch Vorversuche ermittelt werden.

Das beim Aufschluss in einem Verfahren gemäß vorliegender Erfindung gelöste Lignin wird bevorzugt vom Feststoff abgetrennt. z.B. durch Filtration, Zentrifugieren. Durch den geringen Ligningehalt kann das im Substrat verbleibende Xylan fast vollständig in einem weiteren, reinen Produktstrom zu Zuckern und/oder Oligosacchariden abgebaut und gewonnen werden.

Je nach angestrebter weiterer Verwendung der Produkte kann durch die Kombination der Parameter NaOH-Konzentration, Temperatur, Dauer, Stoffdichte und Alkohol Konzentration entweder eine maximale Ligninausbeute von etwa 90 % bei geringem Hemicelluloseabbau (ca. 10%), oder eine Ligninausbeute von ca 70 % bei unter 1% Hemicelluloseabbau erreicht werden. Selbst im Falle des 90%-igen Ligninabbaus bei ca 10% Hemicelluloseabbau übertrifft die Selektivität des erfindungsgemäßen Verfahrens bei weitem die Selektivität der bisher beschreibenen Verfahren.

Durch geeignete Auswahl der Konzentration der Aufschlusskomponenten Alkohol, Wasser und Lauge, sowie der Reaktionsparameter Temperatur, Aufschlussdauer und Feststoffkonzentration für die jeweils aufzuschließende Lignocellulose kann eine angestrebte Ligninausbeute eingestellt werden. Beispielsweise können für die jeweils aufzuschließende Lignocellulose Regressionsmodelle für Aufschlussdaten erstellt werden, aus denen für den jeweils angestrebten Ligningehalt des nach dem Aufschluss anfallenden Feststoffes die optimale prozentuelle Zusammensetzung der Aufschlusskomponenten und die optimalen Reaktionsparameter gewählt werden können. Die Erstellung solcher Regressionsmodelle kann dabei mit statistischer Versuchsplanung erfolgen.

Die Aufschlussparamenter werden für die jeweils aufzuschließende Lignocellulose bevorzugt so gewählt, dass sich aus der Menge des gewonnen Lignins und den aus den Produkten des nach Abtrennung der Ligninlösung gewonnenem Feststoffes die höchste Wertschöpfung ergibt. Das heisst, die Einstellung der angegebenen Parameter erfolgt derart, dass optimale Mengen höherwertiger Produkte aus dem gemäß vorliegender Erfindung aufgeschlossenen Material erhalten werden.

Eine der bevorzugten Varianten zielt darauf ab, dass das gewonnene Lignin die niedrigst mögliche Konzentration an, aus der Spaltung von Hemicellulose stammenden, Produkten enthält.

In einem weiteren Aspekt stellt die vorliegende Erfindung ein Verfahren zur Erreichung eines angestrebten Delignifizierungsgrades des, nach der Abtrennung der Flüssigphase gewonnenen Feststoffes bei der Ligningewinnung aus Lignocellulose durch Aufschluss mit Alkohol, Wasser und einer Lauge unter 100°C, zur Verfügung, das dadurch gekennzeichnet ist, dass die prozentuelle Zusammensetzung der drei Aufschlusskomponenten Alkohol, Wasser und Lauge, sowie die Reaktionsparameter Temperatur, Aufschlussdauer und Feststoffkonzentration je nach angestrebtem Ligningehalt des, nach dem Aufschluss nach Abtrennung der Flüssigphase gewonnenen Feststoffes, gewählt wird; bevorzugt, dass für die jeweils aufzuschließende Lignocellulose Regressionsmodelle für Aufschlussdaten erstellt werden, aus der für den jeweils angestrebten Ligningehalt des nach Aufschluss anfallenden Feststoffes die optimale prozentuelle Zusammensetzung der Aufschlusskomponenten und die optimalen Reaktionsparameter gewählt werden können, wobei die Erstellung der Regressionsmodelle bevorzugt gemäß statistischer Versuchsplanung erfolgt.

### Beispiel 1

### Einstellung der Ligninausbeute und Selektivität des Lignocelluloseaufschlusses durch Wahl bestimmter Aufschlussparameter

Weizenstroh (21,0 Gew% Ligningehalt, 20,9 Gew% Xylangehalt - dieser entspricht 238 g hydrolisierte Xylose pro kg Weizenstroh) wurde auf eine Partikelgröße von 2 mm mit einer Ultrazentrifugalmühle zerkleinert. Das Stroh wurde in einer Mischung aus Wasser, Ethanol, NaOH suspendiert und unter Rühren bei konstanter Temperatur aufgeschlossen. Im gewählten Versuchsplan (zentraler zusammengesetzter Optimierungsplan) wurde der Feststoffgehalt (FG) des Weizenstrohs in der Aufschlusslösung zischen 5 und 10 Massen % variiert, die Temperatur zwischen 30 und 70°C, die Laugenmenge zwischen 4 und 8 Gew% bezogen auf den Feststoff, die Alkoholkonzentration der Aufschlusslösung wurde zwischen 0 und 80 Vol%, die Aufschlusszeit zwischen einer und 24 Stunden eingestellt. Nach dem Aufschluss wurde der verbleibende Feststoff von der Aufschlusslösung abgetrennt und die Feststoffausbeute, der Ligningehalt des Feststoffes sowie der Lignin- und Saccharidgehalt (Xylose, Gesamtzucker) der Aufschlusslösung bestimmt. Folgende Beispiele wurden aus den Regressionsgleichungen des Versuchsplans errechnet:
1. Aufschluss bei **5% FS**, mit 25 Vol% Ethanol in der Aufschlusslösung; Dauer 18 Stunden; Temperatur 70°C, Laugenmenge 8 Gew%.
   Feststoffausbeute: 68,5 ± 2,3%
   Ligningehalt des Feststoffes: 10,8 ± 1,4 %
   Delignifizierung: 65 ± 4%
   Xyloseausbeute in der Aufschlusslösung: 11 ± 2%
   Gesamtzuckerausbeute in der Aufschlusslösung: 9 ± 1%
   Unter diesen Bedingungen werden aus 100 g Weizenstroh 13,7 ± 0,8 g Lignin sowie 6,2 ± 0,7 g Zucker gelöst.
2. Aufschluss bei **5% FS**, mit 80 Vol% Ethanol in der Aufschlusslösung; Dauer 18h; Temperatur 70°C, Laugenmenge 8 Gew%.
   Feststoffausbeute: 68,5 ± 2,3%
   Ligningehalt des Feststoffes: 12,6 ± 1,1 %
   Delignifizierung: 59 ± 3%
   Xyloseausbeute in der Aufschlusslösung: 0%
   Gesamtzuckerausbeute in der Aufschlusslösung: 1% ± 1%
   Unter diesen Bedingungen werden aus 100 g Weizenstroh 12,4 ± 0,6 g Lignin sowie 0,7 ± 0,7 g Zucker gelöst.
3. Aufschluss bei **10% FS**, mit 40 Vol% Ethanol in der Aufschlusslösung; Dauer 18 Stunden; Temperatur 70°C, Laugenmenge 8 Gew%.
   Feststoffausbeute: 60,1 ± 3,1%
   Ligningehalt des Feststoffes: 7,9 ± 1,0 %
   Delignifizierung: 78 ± 6%
   Xyloseausbeute in der Aufschlusslösung: 6 ± 1%
   Gesamtzuckerausbeute in der Aufschlusslösung: 6 ± 1 %
   Unter diesen Bedingungen werden aus 100 g Weizenstroh 16,4 ± 1,3 g Lignin sowie 4,2 ± 0,7 g Zucker gelöst.
4. Aufschluss bei **10% FS**, mit 60 Vol% Ethanol in der Aufschlusslösung, Dauer 18 Stunden; Temperatur 70°C, Laugenmenge 8 Gew%.
   Feststoffausbeute: 60,1 ± 3,1%
   Ligningehalt des Feststoffes: 8,2 ± 1,1 %
   Delignifizierung: 75 ± 5%
   Xyloseausbeute in der Aufschlusslösung: 1.0 ± 0,5%
   Gesamtzuckerausbeute in der Aufschlusslösung: 2 ± 0,6%
   Unter diesen Bedingungen werden aus 100 g Weizenstroh 15,8 ± 1,18 g Lignin sowie 1,4 ± 0,4 g Zucker gelöst.

### Beispiel 2

Wie in Beispiel 1 wurde Weizenstroh mit einer Partikelgröße von 2 mm verwendet. Das Weizenstroh wurde in einer Mischung aus Isopropanol, Wasser und NaOH suspendiert und unter Rühren bei einer konstanten Temperatur von 70°C für 18 Stunden aufgeschlossen. Der Feststoffgehalt in der Aufschlusslösung betrug 5 Massenprozent. Zum Vergleich wurden Aufschlüsse sowohl mit 30 Vol% als auch mit 60 Vol% Isopropanol durchgeführt. Die Laugenmenge betrug 8 Gew% bezogen auf den Feststoff.
Aufschluss mit 30 Vol% Isopropanol:
Feststoffausbeute: 69,5%
Delignifizierung: 93%
Xyloseausbeute in der Aufschlusslösung: 8,3%
Unter diesen Bedingungen werden aus 100 g Weizenstroh 19,5 g Lignin sowie 2,0 g Xylose gelöst.
Aufschluss mit 60 Vol% Isopropanol:
Feststoffausbeute: 68,2%
Delignifizierung: 63%
Xyloseausbeute in der Aufschlusslösung: 0,86%
Unter diesen Bedingungen werden aus 100 g Weizenstroh 13,2 g Lignin sowie 0,2 g Xylose gelöst.

## Patentansprüche

1. Verfahren zur Gewinnung von Lignin aus lignocellulosischem Material durch Aufschluss mit Alkohol, insbesondere mit einem C₁₋₄Alkohol, Wasser und einer Base ausgewählt aus NaOH und KOH, bei einer Temperatur von unter 100°C, insbesondere von 40°C bis 90°C, insbesondere von 50°C bis 70°C, **dadurch gekennzeichnet, dass** 3 bis 12 Teile Base, insbesondere 4 bis 10 Teile Base, insbesondere bevorzugt 5 bis 8 Teile Base, pro 100 Teile des aufzuschließenden trockenen lignocellulosischen Materials eingesetzt werden.

2. Verfahren nach Anspruch 1, **dadurch gekennzeichnet, dass** das Verhältnis von Wasser zu Alkohol in einem Bereich von 10:90 bis 90:10, insbesondere von 20:80 bis 40:60, oder insbesondere in einem Bereich von 60:40 bis 90:10 liegt.

3. Verfahren nach einem der Ansprüche 1 oder 2, **dadurch gekennzeichnet, dass** eine Aufschlussdauer von 2 Stunden bis 36 Stunden, insbesondere von 10 bis 24 Stunden angewandt wird.

4. Verfahren nach einem der Ansprüche 1 bis 3, **dadurch gekennzeichnet, dass** als lignocellulosisches Material Stroh, Bagasse, Energiegräser, insbesondere Elefantengras, Switchgras, und/oder Spelzen, insbesondere Deckspelzen, eingesetzt wird.

5. Verfahren nach einem der Ansprüche 1 bis 4, **dadurch gekennzeichnet, dass** als C₁₋₄Alkohol Isopropanol eingesetzt wird.

6. Verfahren nach einem der Ansprüche 1 bis 4, **dadurch gekennzeichnet, dass** als C₁₋₄Alkohol Ethanol eingesetzt wird.

## Claims

1. A method for the preparation of lignin from lignocellulosic material by pulping with alcohol, in particular with a C₁₋₄ alcohol, water and a base selected from NaOH and KOH at a temperature below 100°C, in particular from 40°C to 90°C, in particular from 50°C to 70°C, **characterized in that** 3 to 12 parts of base, in particular 4 to 10 parts of base, in particular preferably 5 to 8 parts of base, are used per 100 parts of the dry lignocellulosic material to be pulped.

2. A method according to claim 1, **characterized in that** the ratio of water to alcohol is in a range from 10:90 to 90:10, in particular from 20:80 to 40:60, or in particular in a range from 60:40 to 90:10.

3. A method according to any of claims 1 or 2, **characterized in that** there is used a pulping period of 2 hours to 36 hours, in particular from 10 to 24 hours.

4. A method according to any of claims 1 to 3, **characterized in that** there is used as lignocellulosic material straw, bagasse, energy grasses, in particular elephant grass, switchgrass and/or glumes, in particular lemmas.

5. A method according to any of claims 1 to 4, **characterized in that** isopropanol is used as C₁₋₄ alcohol.

6. A method according to any of claims 1 to 4, **characterized in that** ethanol is used as C₁₋₄ alcohol.

## Revendications

1. Procédé d'obtention de lignine à partir d'un matériau lignocellulosique par décomposition avec de l'alcool, en particulier avec un alcool en C₁ à C₄, de l'eau et une base choisie parmi le NaOH et le KOH, à une température inférieure à 100 °C, en particulier, de 40 °C à 90 °C, en particulier de 50 °C à 70 °C, **caractérisé en ce que** 3 à 12 parties de base, en particulier 4 à 10 parties de base, de manière particulièrement préférée 5 à 8 parties de base pour 100 parties du matériau lignocellulosique séché à décomposer sont utilisées.

2. Procédé selon la revendication 1, **caractérisé en ce que** le rapport de l'eau à l'alcool se situe dans une plage de 10:90 à 90:10, en particulier de 20:80 à 40:60 ou en particulier dans une plage de 60:40 à 90:10.

3. Procédé selon l'une des revendications 1 ou 2, **caractérisé en ce qu'**une durée de décomposition de 2 heures à 36 heures, en particulier de 10 à 24 heures est appliquée.

4. Procédé selon l'une des revendications 1 à 3, **caractérisé en ce que** l'on utilise comme matériau lignocellulosique, de la paille, de la bagasse, des plantes herbacées, en particulier de l'herbe à éléphant, de la switchgrass et/ou des balles, en particulier des glumelles.

5. Procédé selon l'une des revendications 1 à 4, **caractérisé en ce que** l'on utilise comme alcool en C₁ à C₄, de l'isopropanol.

6. Procédé selon l'une des revendications 1 à 4, **caractérisé en ce que** l'on utilise comme alcool en C₁ à C₄, de l'éthanol.
